# EUROPEAN PATENT APPLICATION

(11) **EP 4 776 414 A1**
(43) Date of publication of application: **15.07.2026**
(21) Application number: 24861802.7
(22) Date of filing: 15.08.2024
(51) Int. Cl.: H01M 50/271, F41G 1/32, H01M 50/262, H01M 50/296, H01M 50/244, H01M 50/147

(54) **BATTERY CAP ASSEMBLY AND SPLIT-TYPE FUSION SIGHT**

(30) Priority: 06.09.2023 CN 202311145403
(71) Applicant: Huanic Corporation, Xi'an, Shaanxi 710077 (CN)
(72) Inventor: SUN, Jianhua, Shaanxi 710077 (CN); CHENG, Xuewen, Shaanxi 710077 (CN); WANG, Dong, Shaanxi 710077 (CN)
(74) Representative: Weickmann & Weickmann PartmbB
(86) International application number: PCT/CN2024/112470
(87) International publication number: WO 2025/050958

(57) **Abstract**

A battery cap assembly and a split-type fusion sight. The battery cap assembly comprises: a cover plate (1); a conductive negative plate (2), which is arranged on the inner side of the cover plate (1); conductive compression springs (3), which are fixed at two ends of the conductive negative plate (2); and a conductive element (4), which is fixed in the middle of the inner side of the conductive negative plate (2), wherein the conductive element (4) is fastened on the conductive negative plate (2) by means of two screws (5) arranged in the same vertical line; a screw rod (6) passing through the cover plate (1), a fixing base (7), a support base (8) and a grip member (9) are provided at one end of the cover plate (1); a radially extending through hole (11) is provided in the support base (8), and a steel ball (12), a spiral spring (13) and a plug screw (14) are sequentially fitted in the through hole (11) from one side of the grip member (9) to the other side; and a first spherical recess (150) is provided in the end surface of the bottom end of the grip member (9), a second spherical recess (151) is provided in the outer side surface of the bottom end of the grip member (9), and the opening of the first spherical recess (150) faces the through hole (11), such that the steel ball is pressed into the second spherical recess (151) when the grip member (9) is perpendicular to the cover plate (1). The battery cap assembly is not prone to loosening; and a housing is connected to a power supply negative terminal, simplifying the circuit design.

## Description

### TECHNICAL FIELD

The present disclosure relates to a battery cover assembly and a split-type fusion sighting device.

### BACKGROUND

The Chinese invention patent No. 202223132354.0 discloses a split-type fusion sight, which divides a sight with thermal imaging function disclosed in patent application No. 202210970881.4 into two parts including a sighting assembly and an eyepiece component, and then, achieves both electric circuit connection and signal transmission of the two parts through a PCB wiring technology, or separately supplies power to the the parts and performs signal transmission through a wireless communication module, so as to better facilitate the use and maintenance of the inner red dot sighting device with thermal imaging function.

In the above-mentioned invention patent, a fixed connection is achieved between the sighting assembly and the main body, through an engagement groove at the front of a sighting assembly connecting base on the main body of the sight, an engagement base behind the connecting base, an engagement block in the engagement groove, and a vertical screw. Such connection method, especially the way that the lens end of the sighting assembly is connected by the vertical screw, will inevitably need to reserve space for screw holes and occupy the installation space, and then the radial space of the lens component will be narrowed, which will affect the radial sizes of the lens and thus is unfavorable for expansion of the sighting assembly.

In addition, in a conventional battery cover assembly, a negative plate at the inner side of a cover plate and a compression spring on the negative plate are used as a negative terminal for power supply in a circuit, while regard to the whole product, those negative terminals of the circuit of other parts need to be provided with additional negative terminals for power supply, which will inevitably increase the design and processing costs. In addition, a conventional battery cover plate is in threaded connection with a battery compartment by connecting bolt(s), such threaded connection may be loosening due to vibration generated in a long-time use.

### SUMMARY

An object of the present disclosure is to provide a split-type fusion sighting device with expanded functions, which ensures the radial size of a lens component thereof, and which equips with a battery cover plate component that can reduce the provision of negative sites and effectively prevent looseness.

In order to achieve the above object, the present disclosure provides a battery cover assembly comprising a cover plate, a negative conductive plate disposed at the inner side of the cover plate, and conductive compression springs fixed at both ends of the negative conductive plate, the battery cover assembly further includes a conductive element fixed in a middle position of the inner side of the negative conductive plate, the conductive element is fastened on the negative conductive plate by two screws arranged in the same vertical line;

a fastening component is disposed at an end of the cover plate, the fastening component includes a screw rod extending through the cover plate, a fixing base positioned on the outer side of the cover plate and fixed at the outer end of the screw rod, and a support base and a grip member disposed on the outer side of the fixing base;

the support base is fixed on the end side of the fixing base at an end of the cover plate; a bottom end of the grip member is connected with the other end of the support base through a rotation shaft; a groove for accommodating the bottom end is provided in the outer side of the fixing base;

the support base is provided with a through-hole extending radially, in the through-hole a steel ball, a coil spring and a plug screw are fitted sequentially from one side of the grip member to the other side;

a first spherical recess is provided in a bottom end surface of the grip member, and a second spherical recess is provided in an outer side surface of the bottom end of the grip member, wherein the opening of the first spherical recess faces the through-hole such that the steel ball is pressed into the first spherical recess when the grip member is perpendicular to the cover plate.

A plurality of hemispherical convex points are circumferentially provided on the inner side of the fixing base and are uniformly arranged, and the cover plate is provided with a spherical recess corresponding to the hemispherical convex points.

A split-type fusion sight including an inner red dot sighting device provided with a reflective sighting optical system and a sighting assembly fixed on a top surface of the inner red dot sighting device, the sighting assembly comprises a low-light-level night vision sighting component and a thermal imaging sighting component which are disposed in parallel at a front end of a housing; a rear end of the housing is fixed on the top surface of the inner red dot sighting device by vertical screws; and the bottom surfaces at both sides of the front end of the housing are each provided with a screw hole, the screw hole extends obliquely outward and downward and is threadedly connected with an oblique-pull-screw which is obliquely arranged from bottom to top and outside both sides of the top surface of the housing of the inner red dot sighting device; the inner red dot sighting device is connected, at an opening of a battery compartment positioned below the reflective sighting optical system, with the above battery cover assembly by means of a connection shaft; the battery compartment includes a front compartment and a rear compartment arranged side by side, while an upper positioning plunger-spring conductive pin and a lower positioning plunger-spring conductive pin are disposed in a vertically overlapped manner between the front compartment and the rear compartment; each of the upper and lower positioning plunger-spring conductive pins corresponds to one of the screws so as to be connected with a battery negative electrode through the conductive element and the conductive compression spring.

An outer end of each of the upper and lower positioning plunger-spring conductive pins is sleeved with a conductive cap.

A low-light-level night vision lens and a low-light-level night vision chip of the low-light-level night vision sighting component are disposed in an axial direction at one side of the housing, while a thermal imaging lens and a thermal imaging sensing chip of the thermal imaging sighting component are disposed in the axial direction at the other side of the housing; a data processor is disposed in the housing and is connected with the low-light-level night vision chip and the thermal imaging sensing chip, respectively.

The data processor is connected with an interface circuit board disposed on the top surface of the inner red dot sighting device through a circuit switching board disposed on the bottom surface of the housing; a rear end portion of the housing is provided with a circuit main board and a control push-button member provided on the outer side of the circuit main board; while the top surface of the housing is provided with a control push-button component.

The present disclosure has the advantages that the battery cover assembly is not prone to loosening, the housing is connected to a power supply negative terminal, simplifying the circuit design.

### BRIEF DESCRIPTION OF THE DRAWINGS

FIG. 1 is a schematic view showing the inner side of a battery cover assembly.
FIG. 2 is a schematic view showing the outer side of a battery cover assembly.
FIG. 3 is an exploded view of a battery cover assembly.
FIG. 4 is a cross-sectional view of a battery cover assembly.
FIG. 5 is a schematic view showing the structure of the grip member 9.
FIG. 6 is a rear oblique schematic view of a split-type fusion sight.
FIG. 7 is a front oblique side schematic view of a split-type fusion sight.
FIG. 8 is a component-disassembling schematic view of a split-type fusion sight.
FIG. 9 is a structural exploded view of a sighting assembly.

### LIST OF REFERENCE NUMERALS:

1. Cover plate; 2. Negative conductive plate; 3. Conductive compression spring; 4. Conductive element; 5. Screw; 6. Screw rod; 7. Fixing base; 8. Support base; 9. Grip member; 10. Groove; 11. Through-hole; 12. Steel ball; 13. Coil spring; 14. Plug screw; 15. Battery compartment; 150. First spherical recess; 151. Second spherical recess; 16. Rotation shaft; 17. Insulating pad; 18. Sealing ring; 19. Inner red dot sighting device; 20. Sighting assembly; 21. Low-light-level night vision sighting component; 22. Thermal imaging sighting component; 23. Vertical screw; 24. Oblique-pull-screw; 25. Connection shaft; 26. Battery cover assembly; 27. Front compartment; 28. Rear compartment; 29. Upper positioning plunger-spring conductive pin; 30. Lower positioning plunger-spring conductive pin; 31. Conductive cap; 32. Low-light-level night vision lens; 33. Low-light-level night vision chip; 34. Thermal imaging lens; 35. Thermal imaging sensing chip; 36. Data processor; 37. Circuit switching board; 38. Interface circuit board; 39. Circuit main board; 40. Control push-button member; 41. Control push-button component; 42. Bottom cover; 43. Hemispherical convex point; 44. Data transmission port; 45. Threaded hole.

### DETAILED DESCRIPTION

In order to further elaborate the technical means adopted by the present disclosure to achieve the intended purpose and the effects thereof, the specific implementation, structural features and effects thereof of the present disclosure are to be described in detail below with reference to the accompanying drawings and the embodiments.

Hereinafter, the technical solutions of the embodiments of the present disclosure will be clearly and completely described with reference to the accompanying drawings of the embodiments of the present disclosure. Obviously, the described embodiments are only some of the embodiments of the present disclosure, but not all of them. Based on the embodiments of the present disclosure, all other embodiments obtained by those of ordinary skill in the art without paying creative efforts fall within the scope of protection of the present disclosure.

In the description of the present disclosure, it should be understood that the orientations or positional relationships indicated by the terms such as "center", "upper", "lower", "front", "rear", "left", "right", "vertical", "horizontal", "align", "overlap", "bottom", "inner side", "outer side", etc., are orientations or positional relationships shown based on the accompanying drawings, and are used only for the purpose of facilitating the description of the present disclosure and simplifying the description, and are not intended to indicate or imply that the apparatus or element referred to must have a specific orientation, or be constructed and operated in a particular orientation, thus they are not to be construed as a limitation of the present disclosure.

The terms "first" and "second" are used for descriptive purposes only and are not to be understood as indicating or implying any relative importance or implicitly specifying the number of the technical features indicated. Therefore, the features defined with "first" and "second" may explicitly or implicitly include one or more of the features; in the description of the present disclosure, unless otherwise stated, the meaning of "plurality" is two or more.

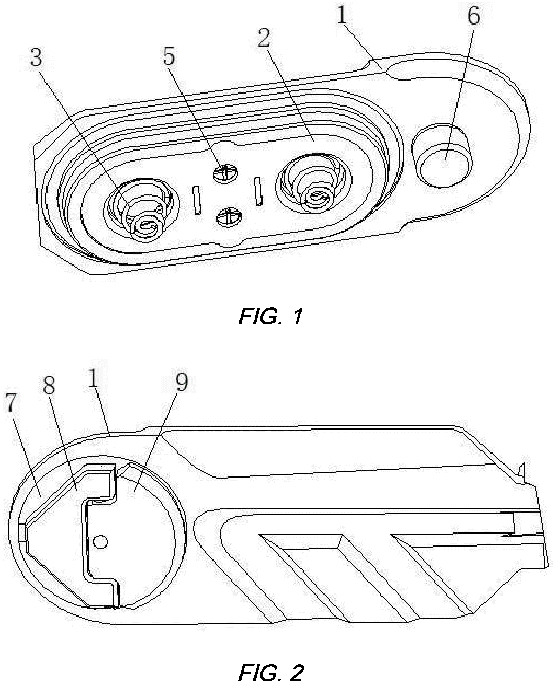

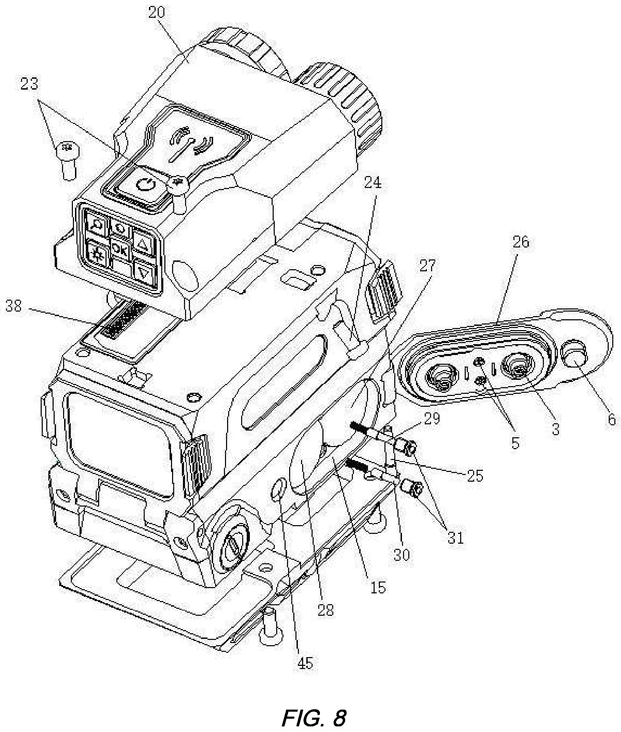

FIG. 1 shows a battery cover assembly, which includes a cover plate 1, a negative conductive plate 2 disposed at the inner side of the cover plate 1, and conductive compression springs 3 fixed at both ends of the negative conductive plate 2. The battery cover assembly further includes a conductive element 4 fixed in a middle position at the inner side of the negative conductive plate, and the conductive element 4 is fastened on the negative conductive plate 2 by two screws 5 arranged in one vertical line, and the two screws 5 are configured to correspond to an upper positioning plunger-spring conductive pin 29 and a lower positioning plunger-spring conductive pin 30, respectively (the upper and lower positioning plunger-spring conductive pins are disposed between a front compartment 27 and a rear compartment 28 of the battery compartment, as shown in FIG. 8). Therefore, the battery negative electrode is connected through the conductive element 4 and the conductive compression spring 3, and that the power supply negative terminal is further connect with the housing of the split-type fusion sight through the upper and lower positioning plunger-spring conductive pins 29, 30, so that the entire housing becomes the power supply negative terminal, and thus the negative terminal of any circuit board may be connected with the neighboring housing when the circuit is designed, without the need to lead a separate negative line as before, so that the circuit design of the whole product, especially the design of the negative line is further simplified and convenient.

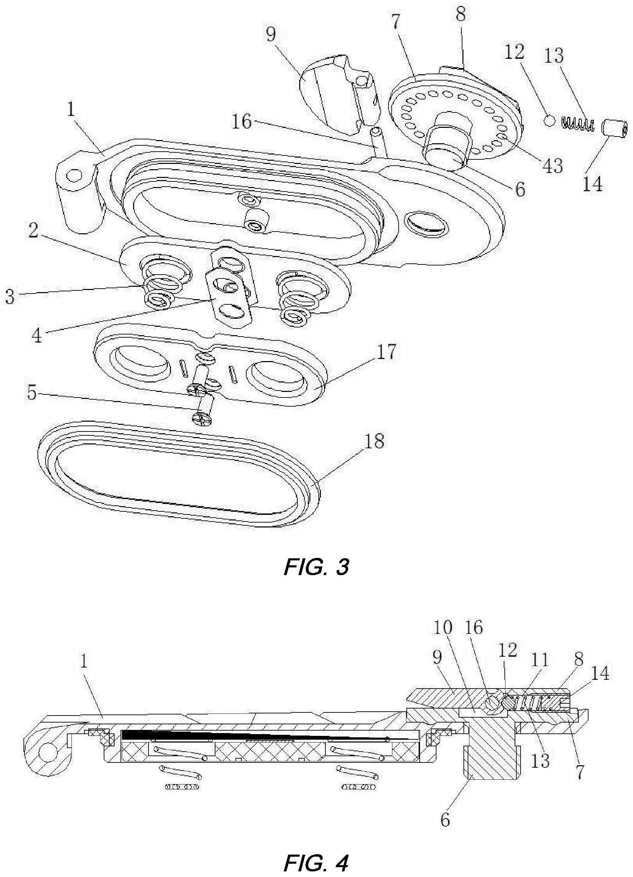

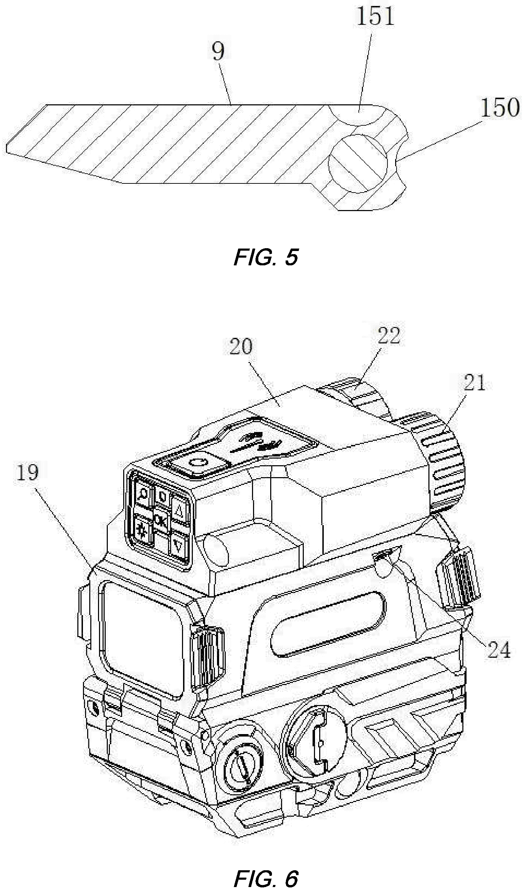

With reference to FIGs. 2, 3 and 4, it can be seen that a fastening component is disposed at one end of the cover plate 1, the fastening component includes a screw rod 6 passing through the cover plate 1, a fixing base 7 positioned on the outer side of the cover plate 1 and fixed at the outer end of the screw rod 6, and a support base 8 and a grip member 9 disposed on the outer side of the fixing base 7. The support base 8 is fixed on the end side of the fixing base 7 at one end of the cover plate 1, and the bottom end of the grip member 9 is connected with the other end of the support base 8, i.e. the left-hand side end of the viewer as shown in FIG. 4, through a rotation shaft 16. A groove 10 for accommodating the bottom end of the grip member 9 is provided in the outer side of the fixing base 7, and, in order to enhance the anti-loosening effect on the screw rod 6, the support base 8 is provided with a through-hole 11 which is extending radially, in which a steel ball 12, a coil spring 13 and a plug screw 14 are fitted sequentially from one side of the grip member 9 to the other side. A bottom end surface of the grip member 9 is provided with a first spherical recess 150 as shown in FIG. 5, and an outer side surface of the bottom end of the grip member 9 is provided with a second spherical recess 151, while the first spherical recess 150 has an opening faces the through-hole 11, so that when the grip member 9 is in a retracted position, i.e. it is placed parallel to the cover plate 1, the steel ball 12 is pressed into the first spherical recess 150 by the coil spring 13 to achieve a limitation to the grip member 9. And, when the grip member 9 is in an opened position, i.e. when a plate surface thereof is perpendicular to the cover plate 1, the steel ball 12 is pressed into the second spherical recess 151 by the coil spring 13 to achieve a limitation to the grip member 9. With such limitation by means of the steel ball 12, the coil spring 13, the first spherical recess 150 and the second spherical recess 151, the rotation of the grip member 9 around the shaft 16 can be limited.

As shown in FIG. 3, a plurality of hemispherical convex points 43 are provided circumferentially on the inner side of the fixing base 7 and are arranged uniformly, while the cover plate 1 is provided with spherical recesses corresponding to those hemispherical convex points 43. By virtue of such configuration, it is possible to generate a sound and a jamming effect when the grip member 9 is turned, which can help to prevent the screw rod from loosening, and also a user can know the number of turns of tightening from the number of such sound, so as to prevent damage to the screw thread caused by over-tightening of the screw rod. In turn, the rotation of the screw rod 6 can be limited, and then the rotation of the screw rod 6 caused by vibration is prevented, so that the purpose of preventing the screw rod 6 from loosening is achieved, and thus the loosening of the battery cover is effectively prevented.

Finally, it should be noted that the screw rod 6 provided in this embodiment includes a threaded section at the inner side of the cover plate 1 extending through a threaded hole in the cover plate 1, and a polished rod section (i.e., an unthreaded, smooth cylinder) positioned at the outer side of the cover plate 1 and being fixedly connected with the grip member 9, so that the screw rod 6 cannot fall off the cover plate 1 after being withdrawn from the threaded hole 45 provided at one side of the battery compartment 15 shown in FIG. 8.

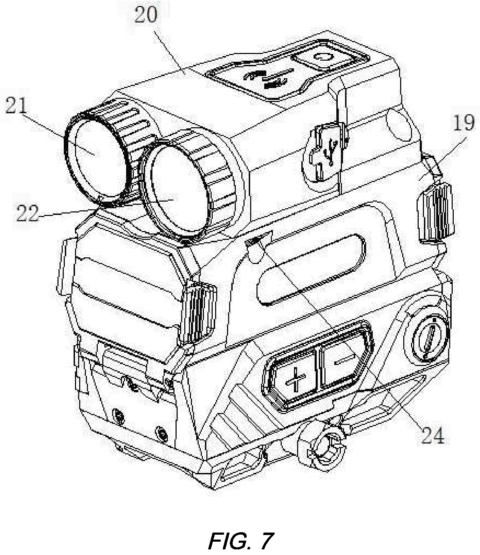

FIGs. 6 and 7 show a split-type fusion sight including an inner red dot sighting device 19 provided with a reflective sighting optical system, and a sighting assembly 20 fixed on the top surface of the inner red dot sighting device 19 (the sighting assembly may also be referred to as a fusion camera assembly in this embodiment, and the name "sighting assembly" is reserved mainly for facilitating reference to the invention patent application No. 202210970881.4 cited in the background section), while it is different from the prior art in that the sighting assembly 20 comprises a low-light-level night vision sighting component 21 and a thermal imaging sighting component 22, disposed in parallel at the front end of the housing as shown in FIG. 7. The rear end of the housing is fixed on the top surface of the inner red dot sighting device 19 by vertical screws 23, and the bottom surfaces at both sides of the front end of the housing are each provided with a screw hole, the screw hole extends obliquely outward and downward and is threadedly connected with an oblique-pull-screw 24 which is obliquely arranged from bottom to top and outside both sides of the top surface of the housing of the inner red dot sighting device 19. As can be seen from FIG. 8, at a compartment opening of the battery compartment 15 of the inner red dot sighting device 19, which is positioned below the reflective sighting optical system, a battery cover assembly 26 is connected via a connection shaft 25, that is, the cover plate 1 of the battery cover assembly is rotatably connected with the housing at the rear of the battery compartment 15 by means of the connection shaft 25.

The battery compartment 15 includes a front compartment 27 and a rear compartment 28 arranged side by side, between the front compartment 27 and the rear compartment 28 are disposed an upper positioning plunger-spring conductive pin 29 and a lower positioning plunger-spring conductive pin 30 in a vertically overlapped manner. Each of the upper and lower positioning plunger-spring conductive pins 29, 30 each corresponds to one of the screws 5 as shown in FIG. 3, so that they are connected with the battery negative electrode through the conductive element 4 and the conductive compression spring 3, and that both the sighting assembly and the housing of the inner red dot sight become the power supply negative terminal, which significantly simplifies the design of the negative terminal in the circuit board, and further improves the use reliability of the whole product.

Each of the upper and lower positioning plunger-spring conductive pin 29, 30, as shown in FIG. 8, is sleeved with a conductive cap 31 at the outer end, which increases the conductive contact area with the screw 5 and reduces the conductive resistivity, and thus the conductive stability is ensured.

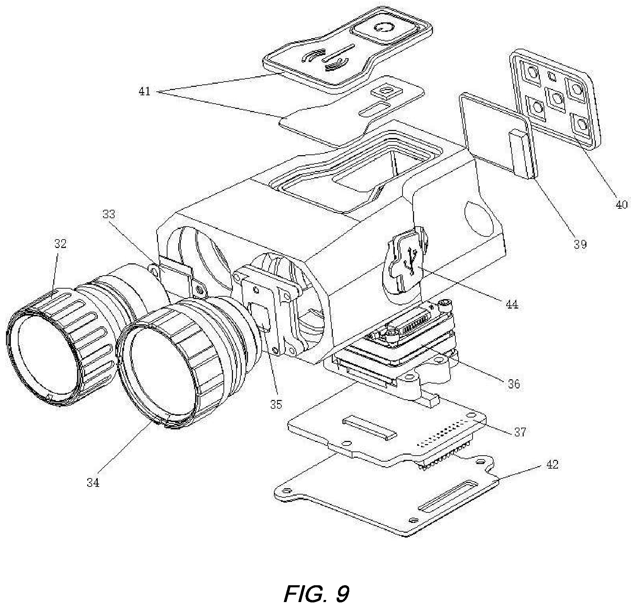

FIG. 9 is a schematic structural view of the sighting assembly, in which the low-light-level night vision lens 32 and the low-light-level night vision chip 33 of the low-light-level night vision sighting component 21 are disposed in an axial direction at one side of the housing, and the thermal imaging lens 34 and the thermal imaging sensing chip 35 of the thermal imaging sighting component 22 are disposed in the axial direction on the other side of the housing. A data processor 36 connected with the low-light-level night vision chip 33 and the thermal imaging sensing chip 35 is disposed in the housing; the data processor 36 is connected with an interface circuit board 38 disposed on the top surface of the inner red dot sighting device 19 through a circuit switching board 37 disposed on the bottom surface of the housing (enclosed in the housing by a bottom cover 42). The rear end of the housing is provided with a circuit main board 39 and a control push-button member 40 which is provided on the outer side of the circuit main board 39, while the top surface of the housing is provided with a control push-button component 41.

In this embodiment, the fixation of the sighting assembly from oblique below is accomplished by using oblique-pull-screws 24, so that the crowding of radial space of the sighting assembly due to the fixation method with vertical screws in the prior art is effectively avoided.

## Claims

1. A battery cover assembly, comprising a cover plate (1), a negative conductive plate (2) disposed at the inner side of the cover plate (1), and conductive compression springs (3) fixed at both ends of the negative conductive plate (2), **characterized in that** the battery cover assembly further comprises a conductive element (4) fixed in the middle of the inner side of the negative conductive plate (2), the conductive element (4) is fastened on the negative conductive plate (2) by two screws (5) arranged in the same vertical line;
a fastening component is disposed at an end of the cover plate (1), the fastening component comprises a screw rod (6) extending through the cover plate (1), a fixing base (7) positioned on the outer side of the cover plate (1) and fixed at an outer end of the screw rod (6), and a support base (8) and a grip member (9) disposed on the outer side of the fixing base (7);
the support base (8) is fixed on the end side of the fixing base (7) at an end of the cover plate (1);
a bottom end of the grip member (9) is connected with the other end of the support base (8) through a rotation shaft (16);
a groove (10) is provided in the outer side of the fixing base (7) for accommodating the bottom end;
the support base (8) is provided with a through-hole (11) extending radially, in the through-hole a steel ball (12), a coil spring (13) and a plug screw (14) are fitted sequentially from one side of the grip member (9) to the other side;
a first spherical recess (150) is provided in a bottom end surface of the grip member (9), and a second spherical recess (151) is provided in an outer side surface of the bottom end of the grip member (9), the opening of the first spherical recess (150) faces the through-hole (11) such that the steel ball (12) is pressed into the first spherical recess (150) when the grip member (9) is perpendicular to the cover plate (1).

2. The battery cover assembly according to claim 1, **characterized in that** a plurality of hemispherical convex points (43) are circumferentially provided on the inner side of the fixing base (7) and are arranged uniformly, and the cover plate (1) is provided with spherical recesses corresponding to the hemispherical convex points (43).

3. A split-type fusion sight, comprising an inner red dot sighting device (19) provided with a reflective sighting optical system, and a sighting assembly (20) fixed on a top surface of the inner red dot sighting device (19), **characterized in that** the sighting assembly (20) comprises a low-light-level night vision sighting component (21) and a thermal imaging sighting component (22) that are disposed in parallel at a front end of a housing;
a rear end of the housing is fixed on the top surface of the inner red dot sighting device (19) by vertical screws (23); and the bottom surfaces at both sides of the front end of the housing are each provided with a screw hole, the screw hole extends obliquely outward and downward and is threadedly connected with an oblique-pull-screw (24) which is obliquely arranged from bottom to top and outside both sides of the top surface of the housing of the inner red dot sighting device (19);
the inner red dot sighting device (19) is connected, at an opening of a battery compartment positioned below the reflective sighting optical system, with the battery cover assembly (26) in accordance with claim 1, by means of a connection shaft (25);
the battery compartment comprises a front compartment (27) and a rear compartment (28) arranged side by side, an upper positioning plunger-spring conductive pin (29) and a lower positioning plunger-spring conductive pin (30) are disposed in a vertically overlapped manner between the front compartment (27) and the rear compartment (28);
the upper positioning plunger-spring conductive pin (29) and the lower positioning plunger-spring conductive pin (30) each corresponds to one of the screws (5) so as to be connected with a battery negative electrode through the conductive element (4) and the conductive compression spring (3).

4. The split-type fusion sight according to claim 3, **characterized in that** the outer end of each of the upper positioning plunger-spring conductive pin (29) and the lower positioning plunger-spring conductive pin (30) is sleeved with a conductive cap (31).

5. The split-type fusion sight according to claim 3 or 4, **characterized in that**,
a low-light-level night vision lens (32) and a low-light-level night vision chip (33) of the low-light-level night vision sighting component (21) are disposed in an axial direction at one side of the housing, while a thermal imaging lens (34) and a thermal imaging sensing chip (35) of the thermal imaging sighting component (22) are disposed in the axial direction at the other side of the housing;
a data processor (36) is disposed in the housing and is connected with the low-light-level night vision chip (33) and the thermal imaging sensing chip (35) respectively;
the data processor (36) is connected with an interface circuit board (38) disposed on the top surface of the inner red dot sighting device (19) through a circuit switching board (37) disposed on the bottom surface of the housing; and
a rear end portion of the housing is provided with a circuit main board (39) and a control push-button member (40) provided on the outer side of the circuit main board (39); and the top surface of the housing is provided with a control push-button component (41).
